# EUROPEAN PATENT APPLICATION

(11) **EP 4 491 020 A1**
(43) Date of publication of application: **15.01.2025**
(21) Application number: 23184564.5
(22) Date of filing: 10.07.2023
(51) Int. Cl.: A01N 25/00, A01N 25/02, A01N 31/00, A01N 65/00, A01N 65/22, A01N 65/24, A01N 65/28, A01N 65/36, A01N 65/44, A01P 17/00

(54) **MOSQUITO REPELLENT COMPOSITION**

(71) Applicant: El-Akad, Adel Mohamed Sobhi, Cairo (EG); El-Akad, Norhan Adel Mohamed Sobhi, Cairo (EG)
(72) Inventor: El-Akad, Adel Mohamed Sobhi, Cairo (EG)
(74) Representative: IPrime Rentsch Kaelin AG

(57) **Abstract**

A liquid mosquito repellent composition comprises 60 parts by volume of citronella oil; 4 volume parts of eucalyptus oil; 9 parts by volume of catnip oil; 9 parts by volume of lavender oil; 9 parts by volume of clove oil; 9 parts by volume of cinnamon oil: 4 parts by volume of lemon flower oil; 200 parts by volume of vinegar, preferably apple cider vinegar; 7 parts by volume of ethanol; and 200 parts by volume of water.

## Description

### Field of the Invention

The present invention relates to mosquito repellent compositions and method for manufacturing such compositions.

### Background of the Invention

Mosquitoes are a diverse and widespread group of flying insects that are known for their bothersome bites. With over 3,500 distinct species, mosquitoes are prevalent in many regions across the globe and are capable of thriving both indoors and outdoors. Only female mosquitoes require blood for egg production and engage in blood feeding activities. Female mosquitoes utilize proboscis tubes to inject substances into the host body while drawing blood. These substances impede blood clotting, facilitating prolonged feeding. The host body's cells release histamine near the bite site, causing blood vessel dilation and fluid leakage, resulting in swelling and itchiness.

Mosquitoes are also important vectors of disease, as they can transmit various pathogens to humans and animals through their bites. Some of the most well-known diseases spread by mosquitoes include malaria, dengue fever, Zika virus, and West Nile virus, among others. These diseases can cause significant illness, and in some cases, even death.

Mosquitoes typically lay their eggs in stagnant water, which can include ponds, marshes, and even small pools of water that collect in items such as discarded tires or buckets. Mosquito control measures are critical in reducing the risk of disease transmission and mitigating the nuisance factor associated with their bites.

Throughout history, humans have sought various ways to protect themselves from mosquitoes and their bothersome bites. In ancient times, the Egyptians reportedly slept beneath nets to avoid nocturnal mosquito encounters, while Native Americans applied clay to their skin as a natural deterrent. Various plants were also used as fumigants, burned to repel mosquitoes. Cowboys in America even resorted to smearing rancid animal fat on their bodies as a physical barrier and to generate a malodorous scent that repelled mosquitoes.

Also, fragrant oily substances were used to repel mosquitoes, applied to skin or clothing. They were first recorded in the writings of ancient Greeks, Romans and Indians. Mosquito repellent offers protection against mosquitoes that spread diseases such as malaria, dengue, chikungunya and yellow fever.

For thousands of years, plant-based mosquito repellents have been employed by suspending botanical fragrance within living spaces. Numerous repellents incorporating plant extracts or plant oils, are considered safe for human use, including children, and do not pollute the environment and do not decompose. These oils exhibit varying degrees of effectiveness and mosquito repelling characteristics, with some offering potent but short-lived protection, while others maintaining prolonged efficacy despite weak repelling qualities, and some being effective but rapidly decomposing. Certain oil types possess pungent odours that may be displeasing to humans.

Mosquito repellents are used to repel mosquitoes due to the scent. They may for example be applied to the skin or to textiles, or they can be dispersed in the air. Scientists are now looking for chemicals that disrupt the ability of mosquitoes to sense carbon dioxide, which could lead to the development of a new generation of mosquito repellents.

Advantageously, mosquito repellents should be effective against a broad spectrum of insects. Additionally, such repellents should be long-lasting and non-irritating to skin and mucous membranes, should have a tolerable scent, and should be chemically stable.

The majority of present-day mosquito repellents are chemically synthesized. While being effective, they can have detrimental effects on human and animal health. The compound icaridin effectively repels mosquitoes in Europe and Australia, but incorrect usage can lead to rashes and allergic reactions. If ingested, it can cause coughing, shortness of breath, tremors, oxygen imbalance-induced delirium, nausea, vomiting, gastrointestinal disturbances, cramps, pain, eye irritation, hypotension, bradycardia, insomnia, mood changes, and permanent scarring or burns on the skin. DEET (= N, N-diethyl-meta-toluamide) is a chemical mosquito repellent that can exhibit numerous side effects if not used properly at concentrations between 5-100%. Permethrin, another chemically derived repellent, should not be applied directly to the body, but can be used on mosquito nets, clothing, or tent walls if allowed to dry for 2-4 hours before contact.

Plant-based repellents, while historically used to deter mosquitoes, have been found to be less effective and provide only short-term protection. Garlic, for example, has a repellent effect when applied to the skin but may cause irritation and sensitivity due to its strong odour. Azadirachtin oil possesses bioactive properties that repel mosquitoes but can cause poisoning in some individuals, resulting in vomiting, metabolic acidosis, and toxic encephalopathy. Tea tree oil, another mosquito repellent, can be harmful to human and animal skin at high concentrations and should be diluted with other oils. Prolonged inhalation of tea tree oil may lead to headaches. Star anise oil, a repellent that affects the nerve cells of numerous insects, including mosquitoes, exhibits a limited duration of effectiveness.

To date, comprehensive studies adhering to the World Health Organization's Pesticide Evaluation Scheme (WHOPES) guidelines for repellents testing have been insufficient. More standardized studies are necessary to better assess repellent compounds and develop new products that offer potent repellence and enhanced consumer safety.

Although chemical mosquito repellents rarely cause side effects when used correctly, improper use can lead to various adverse effects, including eye irritation and allergic reactions similar to those caused by pesticides. Ingestion of chemical mosquito repellents can result in coughing, shortness of breath, tremors, delirium due to oxygen imbalance in the blood, nausea, vomiting, gastrointestinal disturbances, cramps, pain, eye irritation, hypertension, bradycardia, insomnia, mood changes, and permanent scarring or burns on the skin.

US 9326524 B1 discloses insect repellents that can be used in lotions and sprays for humans and animals. The core blend consists of cedar oil, geranium oil, peppermint oil, rosemary oil, and lavender oil, combined with inert ingredients like water, glycerine, and isopropyl alcohol. For human use, the mixture is enhanced with clove oil, lemon-grass oil, citronella oil, and lemon eucalyptus oil. For use on dogs, soy-bean oil and thyme oil are added. The mixture may also include zinc oxide and/or titanium dioxide.

CN 112545925 A discloses mosquito-repellent spray composition comprising vegetable oil, stabilizer, alkyl glycoside, trehalose, glycerol, and water.

US 2022/0304303 A1 discloses insect repellent patches. The patches consist of a substrate with an adhesive layer, allowing them to be removably attached to a wearer or an object associated with the wearer. The substrate contains an active agent, an insect repellent composed of one or more essential oils, which releases an effective amount of repellent to deter insects or mask the wearer from detection. These patches can be used on humans and non-human animals, with the repellent being effective for up to 72 hours.

US 2008/0213408 A1 discloses insect repellents intended to deter insects from humans, animals, plants, soil, and architectural structures. The devised compositions consist of an effective quantity of evening primrose oil (EPO) to discourage target pests from approaching specific areas. The repellent formulation can combine EPO with another plant-based oil or a mixture of EPO and catnip.

The compound Icaridin effectively repels mosquitoes in Europe and Australia. They can have severe adverse side effects when not used correctly. DEET, a chemical mosquito repellent, can exhibit numerous side effects if not used properly at concentrations between 5-100%. Permethrin, another chemically derived repellent, should not be applied directly to the body, but can be used on mosquito nets, clothing, or tent walls.

The availability of mosquito repellents is crucial in reducing the risk of mosquito-borne diseases, particularly in areas where mosquitoes are prevalent. Effective repellents can provide an extra layer of protection when combined with other mosquito control measures, such as the elimination of standing water sources and the use of insecticides. As mosquitoes continue to be a significant public health concern, the development of new and more effective mosquito repellents remains a vital area of research.

There is a general need for improvement in this field of technology.

### Summary of the Invention

It is an object of this invention to provide a mosquito repellent composition that counteracts one or more of the above-mentioned and other problems.

These and other objects are substantially achieved by a liquid mosquito repellent composition, a solid mosquito repellent composition, a gelatinous mosquito repellent composition, and by methods for producing the same, according to the independent claims. Further advantageous variants and embodiments follow from the dependent claims and the description.

The solution, according to the invention, can be further improved by various embodiments, each of which is advantageous in itself, and, unless otherwise specified, can be combined with one another as desired. These embodiments and the advantages associated therewith are discussed below.

A first aspect of the invention concerns a liquid mosquito repellent composition.

A liquid mosquito repellent composition according to the invention comprises 60 volume parts of citronella oil; 5 volume parts of eucalyptus oil; 10 volume parts of catnip oil; 10 volume parts of lavender oil; 10 volume parts of clove oil; 10 volume parts of cinnamon oil; and 5 volume parts of lemon flower oil.

Citronella oil is an essential oil, safe on human skin and has a refreshing, fragrant and sweet smell. The US Environmental Protection Agency (EPA) has approved citronella oil as a harmless and non-toxic biocidal oil.

Peppermint (Catnip oil) is a fragrant essential oil that helps to repel mosquitoes because it contains the active ingredients nepetalactone and menthol that provide a good protection against mosquitoes. It is safe for human skin.

Clove oil is an effective repellent oil against mosquitoes as it contains caryophyllene, eugenol and methyl salicylate. The volatile smell of the oil affects the sense of smell of female mosquitoes, limiting their desire to attack their victim. When using clove oil, its dosage should not be exceeded. It is safe for human skin.

Cinnamon oil is an effective anti-mosquito substance that can kill mosquito eggs. It should be used in a small concentration (<1%). It is safe on human skin.

Lavender oil is an effective oil in repelling mosquitoes, as it makes them inert and keeps them away from the target. It is a natural essential oil and is safe for human skin.

Lemon flower oil is one of the most effective natural mosquito repellents. It contains a citrus scent that helps to expel mosquitoes. It is called the mosquito herb because of its effective role in repelling mosquitoes.

Lemon eucalyptus oil is used as a natural repellent because it consists of PMD (para-menthane-3,8-diol), which makes it difficult for mosquitoes and other insects to notice a person's skin odor. Eucalyptus is used as a biocidal oil as it contains cineol. It is safe on human skin. Vansol oil is one of the active ingredients in lemon flower and is a sedative that helps relax heart beats. In the United States, it has been registered as a safe insecticide and acaricide.

Repellent oils are essential oils and have a refreshing, fragrant and sweet smell. They are safe on human skin, and act as non-toxic biocidal oils. However, it is hard to properly make a spreadable composition because essential oils evaporate quickly. This means that advantageously other ingredients are applied to make them last longer, such as emulsifiers, carriers, preservatives and fixatives:

Advantageously, such a liquid mosquito repellent composition according to the invention furthermore comprises 200 volume parts of vinegar; 7 volume parts of ethanol; and 200 volume parts of water.

Advantageously, the vinegar used in the composition is apple cider vinegar.

In an advantageous embodiment of such liquid mosquito repellent composition according to the invention, the composition further comprises at least one of the following substances: encapsulated vanillin oil, glycerol emulsion, sodium benzoate and/or vegetable oil.

Such compounds can help to maintain the repellent composition active and to increase the effectiveness and duration of activity.

Vegetable oils, such as for example olive oil, can be used as a carrier oil.

Sodium benzoate is a preservative.

A second aspect of the invention concerns a method for preparing a liquid mosquito repellent according to the invention.

A method for preparing a liquid mosquito repellent according to the invention comprises the following steps:
- providing 60 volume parts of citronella oil;
- adding 5 volume parts of eucalyptus oil and stirring for 5 min;
- adding 10 volume parts of catnip oil and stirring for 5 min;
- adding 10 volume parts of lavender oil and stirring for 5 min;
- adding 10 volume parts of clove oil and stirring for 5 min;
- adding 10 volume parts of cinnamon oil and stirring for 5 min; and
- adding 10 volume parts of lemon flower oil and stirring for 5 min.

In an advantageous variant of such a method according to the invention, auxiliary compounds are added to the resulting mixture of essential oils, such as for example emulsifiers, carriers, preservatives, and fixatives.
- 30 parts by volume of Vanillin oil (5%) are added to the mixture, which is then stirred for 5 minutes.
- 10 parts by volume of ethyl alcohol (70% spirit) are added to the mixture, which is then stirred for 5 minutes.
- 200 parts by volume of apple cider vinegar to the previous mixture, which is then stirred for 5 minutes.
- 60 parts by volume of glycerol emulsion (Glycerin) are added to the mixture, which is then stirred for 5 minutes.
- 200 parts by volume of water are added to the mixture, which is then stirred for 5 minutes.
- 600 parts by volume of olive oil are added to the mixture, which is then stirred for 5 minutes.
- 10 parts by volume of sodium benzoate are added to the mixture, which is then stirred for 5 minutes.

Vanillin oil (5%) increases protection time by encapsulating repellent oils, reducing the rate of evaporation, and provides protection from mosquitoes for up to 3 hours continuously.
- Ethyl alcohol (70%) helps in the spread of essential oils.

Apple cider vinegar provides a strong pungent smell and a strong taste that repels mosquitoes.

Glycerin (100%) covers the repellent oils as it creates stable droplets around the oils, increasing the retention of oils and slowing down their release and slows evaporation of volatile repellent particles.

Water reduces the concentration of the repellent oils, and helps to retain them for a longer period, dispersing them and making them more effective.

Olive oil carries the repellent oils, reduces the concentration of the repellent oils, increases the area of diffusion, slows down the evaporation and rapid absorption of repellent oils, thus making them last longer as an effective compound.

Sodium benzoate (0.1%) used to prevent and protect against biodegradation resulting from bacterial growth or from unwanted chemical changes.

A third aspect of the invention concerns a solid mosquito repellent composition.

A solid mosquito repellent, according to the invention, comprises beads of a hydrophilic polymer material, containing a liquid mosquito repellent composition according to the invention in the polymer matrix.

Advantageously, the hydrophilic polymer material is sodium polyacrylate.

A fourth aspect of the invention concerns a method for preparing a solid mosquito repellent according to the invention.

A method according to the invention for preparing a solid mosquito repellent comprises the steps:
- providing beads of a hydrophilic polymer material, for example sodium polyacrylate beads;
- saturating the beads in warm water (advantageously at approx. 30 °C) for 4-6 hours;
- submerging the saturated beads in liquid mosquito repellent composition according to the invention, such that the beads can absorb the liquid mosquito repellent composition, for 4-6 hours.

The mosquito repellent beads can then be immediately used to repel mosquitoes. When the beads are dry, they can be remoistened by adding warm water and mosquito repellent liquid to the beads with a volume ratio of 2:1.

A fifth aspect of the invention concerns a method for preparing a gelatinous mosquito repellent.

A method according to the invention for preparing a gelatinous mosquito repellent comprises the steps:
- providing 1.5 litres of water;
- dissolving 1 g sodium benzoate in the water; stirring continuously for 10 min;
- springling 65 g of polyacrylic acid powder on the surface of the resulting solution and leaving the solution for 24 hours until polyacrylic acid powder is saturated;
- stirring continuously for 10 min;
- adding 5 g triethanolamine until the solution thickens and gels;
- dissolving 1 g ortho-ortho EDDHA in a minimal amount of ethanol and mixing the resulting solution to the gelatinous solution;
- mixing 200 millilitres of a liquid mosquito repellent composition according to the invention with the gelatinous solution; stirring continuously for 10 min.

Polyacrylic acid is used in the composition as a gelling agent. It is also known under the trademark name Carbopol. ortho-ortho EDDHA (EDDHA = ethylenediamine-*N*, *N*'-bis(2-hydroxyphenylacetic acid; CAS No. 1170-02-1) is a chelating agent and is used in the composition as a stabilizer.

It is also known under the trademark name Levesol.

The mosquito repellent gel can then be immediately used to repel mosquitoes.

A sixth aspect of the invention concerns a gelatinous mosquito repellent composition.

A gelatinous mosquito repellent composition according to the invention is prepared with the method for preparing a gelatinous mosquito repellent according to the invention.

Further aspects of the present invention become evident as this description proceeds.

The liquid mosquito repellent composition according to the invention is also named NAMOSYIA in this specification.

NAMOSYIA is highly effective as it contains a mixture of repellent oils and adjuvant materials which improve the efficacy and longevity of the repellent oils. NAMOSYIA provides safe and environmentally sustainable protection from mosquito bites. Laboratory experiments have shown that NAMOSYIA, whether in liquid, solid or gel form, can inhibit mosquito response to human odor and provides an average of 7.2 hour of protection.

Using these technologies makes natural oils a more viable option for use in long-lasting repellents.

### Implementation of the invention

What is new in the subject of invention is the use of more than one type of mosquito repellent vegetable oil (natural and synthesized) with different actions and combining them into one composition called NAMOSYIA.

Volatile repellent oil molecules are preserved from agglomeration and biodegradation by adding natural emulsifiers that provide full coverage and slow evaporation of volatile repellent particles.

Oil preservatives are added to protect the composition against unwanted chemical changes and carry the repellent oils to the human skin safely. They reduce the concentration of oils, increase the area of diffusion and slow down the absorption of oils, making them last for longer periods.

This led to the invention of a new natural composition of plant origin, NAMOSYIA, that repels mosquitoes with strong efficacy, while being safe for humans and animals . This composition helps to disrupt the nervous system in female mosquitoes and makes them weak and unable to feed on blood. NAMOSYIA has a fragrant smell and comprises essential oils of plant origin.

Most plants contain natural compounds that they use to defend themselves against attack by plant-eating insects. These compounds may be repellent oils, nutritional deterrents, toxic substances, or growth regulators. Although the primary function of these compounds is to protect against plant-feeding insects, many of them are also effective against mosquitoes. Each plant has its own distinctive characteristics in repelling mosquitoes in terms of effectiveness, acceptable smell, safety to human and animal skin

NAMOSYIA comprises plant oils with different modes of action: 1- Citronella oil; 2- Peppermint (Catnip oil); 3- Clove oil; 4- Cinnamon oil; 5- Lavender oil; 6- Lemon flower oil; 7- Lemon eucalyptus oil.

Optional auxiliary materials in NAMOSYIA are inert and safe plant oils. They can improve and prolong the activity period of the repellent oils; they can improve the spread of essential oils: 1-Vanillin oil (5%); 2- Ethyl alcohol (70%); 3- Apple cider vinegar; 4- Water.

1- Glycerol (Glycerin) emulsion is used as an emulsifier.

Inert and safe plant oils (e.g., olive oil) are used as carriers, to improve and prolong the activity period of repellent oils, and to support the transport of repellent oils to the human skin. The carrier oils determine the viscosity of the repellent composition (thick, fat, light, or watery). They do not evaporate and have no odor:

Preservatives (e.g., 1- Sodium Benzoate (are used to prevent and protect against biodegradation resulting from bacterial growth.

Emulsifiers are used to dissolve and mix repellent essential oils, perfumes, hydrophobic active substances.

### Effect of NAMOSYIA on the olfactory and taste centers of female mosquitoes:

Female mosquitoes rely on the presence of carbon dioxide gas in human exhalation and on the surface of human skin to find their target. A female mosquito can sense subtle changes in gas concentration and track it until it recognizes human breathing. The female mosquito does not rely on carbon dioxide gas alone to locate humans and animals. It also relies on the smell of the skin and sweat of humans. NAMOSYIA plays a significant role in disturbing the olfactory and taste centers of female mosquitoes.
(1) Effect on the olfactory centers of the female mosquitoes: Female mosquitoes have two sets of olfactory organs: the antennae and maxillary palps. These organs are covered by specialized sensory hairs called sensilla that usually contain two to three olfactory neurons called cpA neurons that have a receptor to detect carbon dioxide and smell of sweat and skin. This enables the female mosquitoes to sense the presence of air we exhale. In addition, they can locate blood vessels from which they absorb blood through special sensory organs in their bodies. NAMOSYIA plays a significant role in concealing and camouflaging the source of carbon dioxide that comes out with human exhalation and around the skin, where they block the sensation centers. Thus, female mosquitoes cannot reach the desired aim.
(2) Effect on the taste centers of the female mosquito: Female mosquitoes have taste receptors on their feet (tarsal segments of the legs) as well as their tongue, so once it lands, the mosquito can taste the host even before it bites. The female mosquito uses taste sensors on its feet to determine if this is a human or animal carrying blood suitable for use. When the tip of a mosquito's stylet is exposed to a drop of blood, neurons activate that help her "taste" it. The smell of apple cider vinegar present with NAMOSYIA compound affects the taste sensors on the feet of the female mosquito, repelling them because they contain a vapor with high repellent strength.
3) Effect of NAMOSYIA compound on human skin: The use of NAMOSYIA is safe when the directions are followed and used safely.

The main function of human skin is that it protects the entire body through its physical properties. It resists wetness and prevents the penetration of existing fluids into the various tissues of the body. Human skin protects the body from microbes, regulates its temperature, and allows for a feeling of cold, heat and touch. NAMOSYIA compound consists of several natural oils of plant origin and auxiliary substances that do not harm human skin. It is one of the safest and quickest ways to avoid mosquito bites, only used on the exposed areas of the skin. It is safe to human and animal skin.

### Application of NAMOSYIA:

The use of NAMOSYIA saves time, effort and money. It reliably protects against mosquito bites if applied to the human or animal body in advance. It has been proved to be a good barrier against mosquito bites by hiding or covering the smell that attracts the female mosquito, thus making it difficult for it to find its living targets.

NAMOSYIA provides the protection time of up to 7.8 h, which exceeds the minimum requirement of 2 h set by the National Institute of Health (NIH), Thailand.

NAMOSYIA should not be swallowed or rubbed into mucous membranes and is only applied externally to human or animal skin at the correct dose.

Although commercial mosquito repellents are a staple in many homes, natural mosquito repellent products can be safer on human and animal skin. NAMOSYIA can be applied in more than one form:

NAMOSYIA liquid: NAMOSYIA liquid (the liquid mosquito repellent composition according to the invention) should be sprayed on the visible parts of the skin every 7 hours to ensure that mosquitoes do not get too close, and scented wipes wet with mosquito repellent liquid NAMOSYIA can be used when mosquitoes are detected. Entrances to living and working areas (windows, doors, walls) should be sprayed with mosquito repellent. Also, automatic mosquito-repellent sprays (atomizer) attached to the walls can be used.

Spraying the NAMOSYIA liquid mosquito repellent makes the user unattractive to the mosquitoes. In order to avoid unwanted side effects caused by the repellent, NAMOSYIA liquid mosquito repellent should not get into the eyes. NAMOSYIA liquid should not be to the lips. NAMOSYIA liquid should not be ingested.

NAMOSYIA balls: NAMOSYIA balls (the solid mosquito repellent composition according to the invention) are small solid balls (also called beads in this specification) that resemble crystals, soaked in water and NAMOSYIA mosquito repellent liquid. They are made of polymer (sodium polyacrylate) that is highly hydrophilic and can absorb substantial amounts of water and retain it. Such balls grow up to 200 times their dry size. They are biodegradable and non-toxic. NAMOSYIA balls are placed inside a jar or perforated mesh and attached to the extension of living and working spaces (windows, doors, walls) to repel mosquitoes.

If NAMOSYIA balls filled with water and mosquito repellent liquid are left in an open container, they slowly release liquid and water vapors back into their environment, and dry within 2 weeks. This can last for weeks or even months when the container remains closed. When NAMOSYIA balls are dry, they can be refilled by putting them in a container full of warm water and NAMOSYIA mosquito repellent liquid.

NAMOSYIA gel: NAMOSYIA gel is the gelatinous mosquito repellent composition according to the invention. NAMOSYIA gel is non-toxic. It is applied to windows, doors and walls to expel the mosquitoes.

It is advantageous to fill NAMOSYIA gel in containers with a wide opening, which are then placed on flat surfaces to expel mosquitoes. Fluid vapors and water are slowly released, and NAMOSYIA gel begins to slowly dry within 2 weeks of opening the package. If the containers are left closed and kept cool, they will last for several months. NAMOSYIA gel can be rehydrated by adding a few drops of the mixture of water and mosquito repellent liquid in a ratio of 2:1.

### Period of protection:

| TYPE of NAMOSYIA | NAMOSYIA liquid | NAMOSYIA balls | NAMOSYIA gel |
|---|---|---|---|
| Period of protection | 7.2 hours | 6. 5 hours | 4 hours |

It should be understood that various changes, substitutions, and alterations can be made herein without departing from the spirit and scope of the invention as defined by the appended claims. It should also be apparent that individual elements identified herein as belonging to a particular embodiment may be included in other embodiments of the invention. Moreover, the scope of the present application is not intended to be limited to the particular embodiments of the process, machine, manufacture, and composition of matter, means, methods and steps described in the specification. As one of ordinary skill in the art will readily appreciate from the disclosure herein, processes, machines, manufacture, composition of matter, means, methods, or steps, presently existing or later to be developed that perform substantially the same function or achieve substantially the same result as the corresponding embodiments described herein may be utilized according to the present invention.

Additionally, various references are cited throughout the specification, the disclosures of which are each incorporated herein by reference in their entirety.

## Claims

1. A liquid mosquito repellent composition comprising:
- 60 parts by volume of citronella oil;
- 5 parts by volume of eucalyptus oil;
- 10 parts by volume of catnip oil;
- 10 parts by volume of lavender oil;
- 10 parts by volume of clove oil;
- 10 parts by volume of cinnamon oil; and
- 10 parts by volume of lemon flower oil;

2. The liquid mosquito repellent composition according to claim 1, furthermore comprising:
- 200 parts by volume of apple cider vinegar;
- 7 parts by volume of ethanol; and
- 200 parts by volume of water.

3. The liquid mosquito repellent composition according to claim 2, wherein the vinegar is apple cider vinegar.

4. The liquid mosquito repellent composition according to any of claims 1 to 3, wherein the composition further comprises at least one of the following substances: encapsulated vanillin oil, glycerol emulsion, sodium benzoate and/or vegetable oil.

5. A method for preparing a liquid mosquito repellent according to any of claims 1 to 4, comprising the steps:
- providing 60 parts by volume of citronella oil;
- adding 5 parts by volume of eucalyptus oil and stirring for 5 min;
- adding 10 parts by volume of catnip oil and stirring for 5 min;
- adding 10 parts by volume of lavender oil and stirring for 5 min;
- adding 10 parts by volumes of clove oil and stirring for 5 min;
- adding 10 parts by volume of cinnamon oil and stirring for 5 min; and
- adding 10 parts by volume of lemon flower oil and stirring for 5 min.

6. A solid mosquito repellent, comprising beads of a hydrophilic polymer material containing a liquid mosquito repellent composition according to any of claims 1 to 4 in the polymer matrix.

7. The solid mosquito repellent according to claim 6, wherein the hydrophilic polymer material is sodium polyacrylate.

8. A method for preparing a solid mosquito repellent according to claim 6 or 7, comprising the steps:
- providing beads of a hydrophilic polymer material, for example sodium polyacrylate beads;
- soaking the beads in warm water for 4-6 hours;
- submerging the saturated beads in liquid mosquito repellent composition according to any of claims 1 to 4, such that the beads can absorb the liquid mosquito repellent composition, for 4-6 hours.

9. A method for preparing a gelatinous mosquito repellent composition, comprising the steps:
- providing 1.5 litres of water;
- dissolving 1 g sodium benzoate in the water; stirring continuously for 10 min.
- springling 65 g of polyacrylic acid powder on the surface of the resulting solution and leaving the solution for 24 hours until polyacrylic acid powder is saturated;
- stirring continuously for 10 min;
- adding 5 g triethanolamine until the solution thickens and gels;
- dissolving 1 g ortho-ortho EDDHA in a minimal amount of ethanol and mixing the resulting solution to the gelatinous solution;
- mixing 200 ml of a liquid mosquito repellent composition according to any of claims 1 to 4 with the gelatinous solution; stirring continuously for 10 min.

10. A gelatinous mosquito repellent composition, prepared with the method according to claim 9.
